(19) Europäisches Patentamt
European Patent Office
Office européen des brevets

(11) **EP 1 184 340 B1**

(12) **EUROPÄISCHE PATENTSCHRIFT**

(45) Veröffentlichungstag und Bekanntmachung des Hinweises auf die Patenterteilung:
**14.01.2009 Patentblatt 2009/03**

(51) Int Cl.:
*C01G 49/08* (2006.01)      *G03G 9/083* (2006.01)

(21) Anmeldenummer: **01119632.6**

(22) Anmeldetag: **21.08.2001**

(54) **Verwendung von Magnetitteilchen**

Use of magnetite particles

Utilisation de particule de magnetite

(84) Benannte Vertragsstaaten:
**AT BE CH CY DE DK ES FI FR GB GR IE IT LI LU MC NL PT SE TR**

(30) Priorität: **01.09.2000 DE 10043492**

(43) Veröffentlichungstag der Anmeldung:
**06.03.2002 Patentblatt 2002/10**

(73) Patentinhaber: **LANXESS Deutschland GmbH 51369 Leverkusen (DE)**

(72) Erfinder: **Meisen, Ulrich, Dr. 53925 Kall (DE)**

(56) Entgegenhaltungen:
EP-A- 0 247 884        EP-A- 0 347 681
EP-A- 0 647 593        EP-A- 0 808 801
EP-A- 0 826 635        EP-A- 1 045 292
DE-A- 19 702 431       US-A- 4 282 302
US-A- 5 199 983        US-A- 5 296 326

**Beschreibung**

Die Erfindung betrifft die Verwendung von Magnetitteilchen, unter anderem bei der Herstellung von Tonern..

Teilchenförmige Magnetite, die durch ein Fällverfahren aus wäßrigen Lösungen hergestellt werden, sind seit langem bekannt. In US-A 802 928 wird bereits die Herstellung von Magnetit durch Fällung von Eisen-II-sulfat mit einer alkalischen Komponente und anschließender Oxidation mit Luft beschrieben. In zahlreichen weiteren, nachfolgenden Druckschriften wird ebenfalls die Herstellung von Magnetiten nach dem Fällungsverfahren beschrieben.

Die Herstellung von Magnetiten nach dem Fällungsverfahren unter Zusatz von Silicium wird in JP-A-51 044 298 beschrieben. Reine Fällungsmagnetite ohne Zusatz von Fremdelementen können nach DE-A 3 209 469 diskontinuierlich oder nach DE-A 2 618 058 kontinuierlich hergestellt werden. Normalerweise wird $FeSO_4$ als Eisen-II-salz eingesetzt.

Es ist jedoch auch möglich zur Herstellung eines Magnetits nach dem Fällungsverfahren jegliches lösliche Eisen-II-salz einzusetzen. Insbesondere kommt hier der Einsatz von $FeCl_2$, wie in DE-A 3 004 718 beschrieben, in Frage. Der Einsatz von $Fe-SO_4$ oder $FeCl_2$ hat den Vorteil, dass beide Stoffe in großen Mengen sehr preiswert als Abfallstoffe von der eisenverarbeitenden Industrie bezogen werden können. Als Fällungsmittel kommt neben dem am häufigsten eingesetzten Natriumhydroxid auch CaO oder $CaCO_3$ (DE-A 3 004 718), Ammoniak (DE-A 2 460 493) oder $Na_2CO_3$, $MgC_3$ oder MgO (EP-A 0 187 331) in Frage. Als Oxidationsmittel wird in der Regel Luft eingesetzt. Es werden jedoch auch Verfahren zur Oxidation mit Nitraten (DD-A 216 040 und DD-A 284 478) beschrieben.

Die Magnetite fanden zunächst zur Herstellung von Farben aller Art Anwendung. Der besondere Vorteil von Magnetiten gegenüber organischen Farbstoffen und Ruß liegt in ihrer sehr viel besseren Wetterbeständigkeit, so dass Farben mit Magnetit auch im Außenbereich angewendet werden können.

Weiterhin werden Fällungsmagnetite gern zur Einfärbung von Betonformteilen, wie z.B. Betonpflastersteinen oder Betondachsteinen eingesetzt.

Seit geraumer Zeit werden Magnetite auch in der Elektrofotografie zur Herstellung von Tonern verwendet. Zur Herstellung der Toner für Kopiergeräte mit Einkomponententonem werden bevorzugt Magnetite, die nach dem Fällungsverfahren hergestellt wurden, eingesetzt. Der hierfür eingesetzte magnetische Toner muß verschiedene Eigenschaften aufweisen. Mit fortschreitender Entwicklung und Verbesserung der Kopiergeräte und Drucker wurden die Anforderungen an den magnetischen Toner und folglich an den hierfür verwendeten Magnetit immer höher. Die neueste Druckergeneration erreicht eine Auflösung von mehr als 400 dpi (Punkte pro Zoll), wozu die Entwicklung feinteiliger Toner mit sehr enger Teilchengrößenverteilung erforderlich war. Dies hatte zur Folge, dass die hierfür verwendeten Magnetite ebenfalls eine sehr enge Teilchengrößenverteilung aufweisen müssen. Weiterhin ist eine bestimmte Teilchengröße erforderlich, so dass eine homogene Verteilung der Magnetitteilchen im fertigen Toner gewährleistet ist. Die Magnetite selbst müssen einen ausreichend hohen elektrischen Widerstand haben, um das latente Bild während der elektrostatischen Übertragung zu stabilisieren. Weiterhin müssen Koerzitivkraft, Sättigungsmagnetisierung und vor allem die remanente Magnetisierung im richtigen Verhältnis zu den in der Maschine herrschenden Feldstärken sein.

Für die Anwendung in magnetischen Tonern werden Si-haltige Magnetite eingesetzt. Diese haben ein anderes Ladungsverhalten als reine Magnetite und weisen bei gleicher Teilchengröße eine höhere thermische Stabilität auf. Ein Verfahren zur Herstellung derartiger Teilchen wird in JP-A-61 034 070 beschrieben. Hierbei wird die Si-Komponente zum Eisen-II-sulfat gegeben, was allerdings zu Ausfällungen von Kieselsäure und damit zu einer ungleichmäßigen Verteilung des Siliziums im Magnetitgitter führt. In US-A-4 992 191 wird ein Magnetit mit 0,1 bis 5,0 Atom-% Si bezogen auf Fe beschrieben, der für die Herstellung von Tonern besonders geeignet sein soll.

In dem dort beschriebenen Verfahren wird zu einer alkalischen Komponente in Form einer wäßrigen Lösung eine Silikatkomponente gegeben und dann einer Eisen (II)-Komponente in Form einer wäßrigen Lösung in einer Menge zugegeben, dass ein Molverhältnis von Fe (II)-Komponente zu alkalischer Komponente von rund $0,53 \left[ \dfrac{1,5}{2,85} \right]$ vorliegt, wobei die Temperatur auf 90°C gehalten wird. Die so erhaltene Suspension wird dann mit Luft als Oxidationsmittel behandelt, um sphäroidischen, siliciumhaltigen Magnetit mit einer Teilchengröße im Bereich von 0,1 bis 1,0 $\mu$m zu erhalten. Die erhaltenen Partikel werden filtriert, gewaschen und gemahlen.

In DE-A 19 702 431 wird ein weiteres Verfahren zur Herstellung besonders runder Si-haltiger Magnetite beschrieben. Dort wird erstmals auch ausführlich in einem Vergleichsbeispiel die Herstellung siliciumarmer, nahezu Si-freier runder Magnetite beschrieben. Die Thermostabilität dieser Magnetite wird jedoch als nicht ausreichend für die Herstellung von magnetischen Tonern beschrieben, so dass nach dieser Lehre die Anwesenheit von Silicium als notwendig erachtet wurde, um zur Herstellung von Tonern geeignete Magnetite herzustellen.

Der vorliegendne Erfindung lag die Aufgabe zugrunde, ein besonders kostengünstiges Verfahren zur Herstellung von Magnetiten mit für die Herstellung von magnetischen Tonern geeigneten Eigenschaften zur Verfügung zu stellen sowie die mit diesen Magnetiten herstellbaren Toner selbst.

Überraschenderweise wurde gefunden, dass die in DE-A 19 702 431 als nicht ausreichend temperaturstabil beschriebenen Magnetite sehr wohl in Tonern eingesetzt werden können. Darüberhinaus wird das Herstellungsverfahren durch den Wegfall der das Si einbringenden Komponente, wodurch auch ein Verfahrensschritt entfällt, kostengünstiger.

Diese Aufgabe konnte mit den Magnetiten gemäß dem erfindungsgemäßen Verfahren gelöst werden. Diese siliciumarmen Magnetite können nicht nur in magnetischen Tonern eingesetzt werden, sondern auch zur Einfärbung von Papier, Kunststoff, Lacken, Fasern und Beton und zum Einsatz in Farben verwendet werden.

Si-arm im Sinne der Erfindung sind Magnetite mit einem Si-Gehalt von weniger als 0,025 Gew.-% , bevorzugt weniger als 0,0025 Gew.-%, besonders bevorzugt weniger als 0.001 Gew.-% sowie einer Helligkeit L* von 50,0 bis 60,0 CIELAB, einem Farbstich a* von - 0,5 bis 1,5 CIELAB, einem Farbstich b* von -3,0 bis -7,0 CIELAB, einer Sphärizität von 0,80 bis 1,0, einer Koerzitivkraft von 2,387 bis 5,570 kA/m (30 bis 70 Oe), einer Teilchengröße von 0,1 bis 1,0 $\mu$m, einem Schwefel-Gehalt von 0,05 bis 1,1 Gew.-%, bestimmt als $SO_3$, einem Mangan-Gehalt von 0,05 bis 0,5 Gew.-%, einem Gehalt an wasserlöslichen Anteilen von weniger als 0,2 Gew.-% und einem pH-Wert von 4,0 bis 8,5.

Die erfindungsgemäß einsetzbaren Magnetite sind erhältlich, indem

a) eine alkalische Komponente in Form einer wäßrigen Lösung unter Schutzgas vorgelegt wird,

b) die alkalische Komponente auf eine Temperatur von 50 bis100° C, vorzugsweise auf 60 bis 90° C aufgeheizt wird,

c) eine Eisen-II-komponente in Form einer wäßrigen Lösung in einer Menge zugegeben wird, so dass ein Molverhältnis von Fe-II-komponente zu einem Äquivalent alkalischer Komponente von 0,48 bis 0,6 vorliegt, und wobei die Temperatur auf 50 bis 100°C, vorzugsweise 60 bis 90°C, gehalten wird,

d) die unter c) erhaltene Suspension mit einem Oxidationsmittel behandelt wird, bis ein Fe-III-Gehalt von mehr als 65 mol-% in der Eisenverbindung vorliegt,

e) nach der Oxidation unter d) erneut unter Schutzgas eine alkalische Komponente in Form einer wäßrigen Lösung zu der in d) erhaltenen Suspension in einer Menge gegeben wird, dass ein theoretisches Molverhältnis von unter c) eingesetztem Fe-II zu einem Äquivalent insgesamt eingesetzter, alkalischer Komponente von 0,40 bis 0,48, bevorzugt 0,45 bis 0,47, erhalten wird,

f) diese Suspension auf 50 bis 100°C, vorzugsweise 60 bis 90°C, erwärmt wird,

g) eine Fe-II-komponente in Form einer wäßrigen Lösung in einer Menge dazugegeben wird, so dass ein Molverhältnis von Fe-II-komponente zu einem Äquivalent alkalischer Komponente von 0,48 bis 0,60 erhalten wird,

h) mit einem Oxidationsmittel bis zu einem Fe-II-gehalt in der Eisenverbindung von mehr als 65 mol-%, bezogen auf Eisengehalt, oxidiert wird, und dann

i) filtriert und der Rückstand gewaschen, getrocknet und gemahlen wird.

Die Teilchengröße und Teilchenform der Magnetite kann durch den Fällungs-pH-Wert gesteuert werden. Fällt man die Magnetite im Bereich des Fe-II/NaOH-Verhältnisses von mehr als 0,48, so erhält man zunehmend runde Teilchen, die sich durch sehr niedrige Remanenz auszeichnen. Weiterhin sind diese Teilchen generell, im Vergleich mit den bei anderen pH-Werten hergestellten Magnetiten, relativ feinteilig.

Durch Zugabe von Natronlauge nach Beendigung der ersten Oxidation, weiterer Zugabe von Eisen in Form eines wasserlöslichen Eisen-II-salzes und erneuter Oxidation gelingt es diese feinteiligen Magnetite zu vergröbern. Hierdurch wird die Thermostabilität verbessert. Eine weitere Verbesserung der Thermostabilität kann durch Nachbehandlung mit organischen oder anorganischen Substanzen erzielt werden. Hier werden vorzugsweise anorganische Al, Si, Ti, Mg oder Zr-Verbindungen eingesetzt, die beim Auffällen dichte Hydroxid oder Oxyhydroxydschichten bilden. Besonders bevorzugt ist jedoch der Zusatz von organischen Nachbehandlungsmitteln wie Polysiloxanen oder Ti-Estern.

Als alkalische Komponente kann vorzugsweise ein Alkalimetallhydroxid, ein Erdalkalimetallhydroxid, ein Erdalkalimetalloxid, ein Alkalimetallcarbonat, $MgCO_3$ oder Ammoniak eingesetzt werden. Als Silikatkomponente wird bevorzugt ein wasserlösliches Alkalimetallsilicat verwendet. Als Eisen-II-komponente wird vorzugsweise ein wasserlösliches Fe-II-salz eingesetzt, besonders bevorzugt Eisensulfalt oder Eisendichlorid. Es ist jedoch auch möglich andere wasserlösliche Fe-II-Verbindungen einzusetzen, insbesondere wenn diese zu vergleichbaren Preisen zur Verfügung stehen. Als Oxidationsmittel können vorzugsweise Luftsauerstoff, reiner Sauerstoff, $H_2O_2$, Chlor, Alkalimetallchlorate (z.B. $NaOCl$, $NaClO_3$, $NaClO_4$) oder Nitrate eingesetzt werden. Aus wirtschaftlichen Gründen werden besonders bevor-

zugt Luftsauerstoff, reiner Sauerstoff, $H_2O_2$ oder Natriumnitrat eingesetzt.

Eine besonders bevorzugte Ausführungsform des erfindungsgemäßen Verfahrens soll im folgenden näher beschrieben werden:

Natronlauge mit einem Gehalt von 300 g NaOH pro Liter Wasser wird in einem diskontinuierlichen Rührkessel unter Rühren und Schutzgasdurchleitung vorgelegt.

Anschließend wird auf eine Temperatur zwischen 50 und 100°C, bevorzugt zwischen 60 und 90°C, aufgeheizt. Ist diese Temperatur erreicht, so wird mit der Dosierung der Fe-II-Komponente begonnen. Die Berechnung der Fe-II-Komponente erfolgt über das angestrebte Verhältnis NaOH/Fe-II. Wird beispielsweise ein NaOH/Fe-II-Verhältnis von 0,55 angestrebt und werden 100 mol NaOH vorgelegt, so müssen 100*0,55 = 55 mol Fe-II-Komponente zugegeben werden. Der Berechnung des Alkalimetallhydroxid/Fe-II-Verhältnisses liegt die Gleichung

$$Fe^{2+} + 2\ NaOH\ Fe(OH)_2 + 2\ Na^+\ \text{Fe-II/NaOH} = 0{,}50$$

zugrunde. Wird eine alkalische Komponente eingesetzt, die in einem anderen stöchiometrischen Verhältnis mit der Fe-II-komponente zu $Fe(OH)_2$ oder $FeCO_3$ reagiert, so ist das Verhältnis entsprechend zu verändern. Dieser Fall tritt z.B. bei der Verwendung von Carbonaten oder Erdkalimetallhydroxiden oder -oxiden auf, so dass sich in diesen Fällen folgende Gleichung ergibt:

$$Fe^{2+} + Ca(OH)_2 \rightarrow Fe(OH)_2 + Ca^{2+}\ \text{Fe-II/Ca(OH)}_2: 1{,}0$$

oder

$$Fe^{2+} + Na_2CO_3\ FeCO_3 + 2\ Na^+\ \text{Fe-II/Na}_2\text{CO}_3: 1{,}0.$$

Die Dosierung der Fe-II-Komponente erfolgt vorzugsweise mit einer solchen Geschwindigkeit, dass kein Abfall der Temperatur auftritt. Nachdem die Zugabe der berechneten Menge der Fe-II-Komponente beendet ist, wird gegebenenfalls nochmals auf 50 bis 100°C aufgeheizt. In vielen Fällen sind die Temperatur unter b) und die Temperatur unter c) identisch, so dass ein nochmaliger Aufheizschritt in c) nicht erforderlich ist. Ist die Temperatur erreicht, so wird die Schutzgasbegasung beendet und mit der Zugabe des Oxidationsmittels begonnen. Im Falle einer Luftbegasung wird Luft über eine Begasungsvorrichtung unterhalb des Rührers eingeleitet. Die pro Stunde zugeführte Luftmenge beträgt zwischen 0,5 und 15 l/h pro mol Fe-II. Bei Verwendung von $NaNO_3$ wird das Oxidationsmittel als wäßrige Lösung innerhalb von 5 bis 30 Minuten zugepumpt. Die hierbei erforderliche Menge berechnet sich nach:

$$\text{NaNO}_3\ [\text{mol}] = \text{Fe-II}\ [\text{mol}]*0{,}67*1/8.$$

Für 100 mol Fe-II sind demnach 8,375 mol $NaNO_3$ erforderlich. Die Berechnung der anderen Oxidationsmittel erfolgt entsprechend den Redoxäquivalenten der jeweiligen Oxidationsmittel. Es ist zu beachten, dass nur maximal 66,6 % des Fe-II für die Herstellung von Magnetit oxidiert werden müssen.

Die Oxidation ist vorzugsweise beendet, wenn ein Fe-III-Gehalt von mehr als 65 mol-% erreicht ist. Dies kann durch Redoxtitration festgestellt werden.

Im Anschluß an diesen ersten Durchlauf (Schritte a) bis d)) werden diese Schritte abermals durchgeführt. Eine alkalische Komponente wird unter Rühren und Schutzgasdurchleitung der Suspension aus d) zugegeben. Die erforderliche Menge alkalischer Komponente berechnet sich wie oben angegeben aus dem hier erforderlichen Fe-II/NaOH-Verhältnis. Danach wird die Fe-II-Komponente in einer dem angestrebten Fe-II/NaOH-Verhältnis entsprechenden Menge zugefügt. Nach Zugabe dieser Menge an Fe-II-Komponente wird die Schutzgasdurchleitung abgestellt und erneut mit der Oxidation begonnen.

Nach Abschluss der zweiten Oxidation wird das Produkt filtriert, gewaschen und getrocknet. Vor der Trocknung kann das Produkt zur Verbesserung der Thermostabilität und der Dispergierbarkeit nachbehandelt werden. Hierzu wird vorzugsweise ein Polysiloxan oder organischer Ti-Ester eingesetzt.

Die nach dem erfindungsgemäßen Verfahren hergestellten Magnetite bzw. die erfindungsgemäßen Magnetite lassen sich besonders vorteilhaft für die Herstellung von Tonern aber auch zur Herstellung von Druckfarben und von Farbpasten für Tintenstrahldrucker einsetzen..

Die Messung der Eigenschaften der Magnetite erfolgt nach den nachfolgenden Methoden:

1. Die Farbwerte werden durch Präparation eines Lackes geprüft:

3,2 g Magnetit werden am Microdismembrator (30") mit einer Achatkugel von 10 mm Durchmesser gemahlen. Dann werden 2,0 g des Bindemittels Alkydal F48 (Produkt der Bayer AG), 0,1 g des zu prüfenden gemahlenen Magnetits und 1,0 g $TiO_2$ (Bayertitan R-FK2; Produkt der Bayer AG) auf einer Tellerfarbausreibmaschine der Fa. Engelsmann mit einem Durchmesser von 250 mm (auch Muller genannt) angerieben. Die Farbwerte L* (Helligkeit), a* (Rotstich) und b* (Blaustich) werden nach DIN 55 986 mit Dataflash 2000 (d/8°), Gerät A und dem Auswerteprogramm CIELAB2 vom 19.10.1989 bestimmt. Die gesamte Verfahrensweise der Farbmessung ist ausführlich in EP-A 0 911 370 beschrieben.

2. Die Magnetwerte (Koerzitivkraft, spezifische Sättigungsmagnetisierung) spezifische remanente Magnetisierung) werden am Magnetometer der Fa. Bayer (bei 5000 Oe Feldstärke (entspr. 397,9 A·m$^{-1}$) gemessen.

3. Die BET-Oberfläche wird nach DIN 66 131 gemessen:

Gasgemisch: 90 % He. 10 % $N_2$; Messtemperatur: 77,4 K;
Ausheizen bei 140°C, 60 Minuten.

4. Elementanalyse für Si und Mn:

Si wird spektralanalytisch durch ICP-OES bestimmt. Mn wird durch Atomabsorptionsspektroskopie bestimmt.

5. Elementanalyse für Fe (gesamt), Fe-II und Fe-III:

Bestimmungen nach DIN 55 913: Der Fe-II-Gehalt wird durch Titration mit $KMnO_4$ mittels eines Memotitrators (Mettler DL-70) ermittelt. Fe-III wird analog mit $TiCl_3$ bestimmt. Der Gesamteisengehalt wird aus den beiden Einzelwerten und der Einwaage errechnet. Die Bestimmung der Gehalte der beiden Maßlösungen erfolgt täglich.

6. Teilchenform und Teilchengröße:

Abschätzung der Teilchengröße und -form aus einer transmissionsmikroskopischen (TEM) Aufnahme bei einer 30.000-fachen Vergrößerung.

7. Elementanalyse für S:

Schwefel wird durch ICP-OES bestimmt.

8. Die Sphärizität wird mittels Bildanalyse anhand einer TEM-Aufnahme mit 30 000-facher Vergrößerung bestimmt. die Auswertung erfolgt nach der Formfaktormethode mittels eines automatischen Bildanalysesystems (IBAS, Fa. Zeiss). Hierbei gibt das Verhältnis minimaler Durchmesser zu maximaler Durchmesser eines Teilchens den Formfaktor. Je näher dieser Wert bei 1,0 liegt, um so runder ist ein Teilchen.

9. Die wasserlöslichen Anteile werden nach ISO-EN 787 Teil 3 bestimmt.

10. Der pH-Wert des Magnetitpulvers wird nach ISO-EN 787 Teil 9 bestimmt.

Die Erfindung soll anhand der nachfolgenden Beispiele näher erläutert werden.

**Beispiele**

**Beispiel 1**

In einen Rührkessel von 30 Liter Nutzvolumen wurden 6 000 g Natronlauge mit einem Gehalt von 300 g/l, was 45 mol NaOH entspricht, gegeben. Nach Einschalten der Stickstoffbegasung und des Rührers wurde die Natronlauge auf 90°C aufgeheizt. In 51 Minuten wurden nun 13,756 Liter Eisen-II-sulfatlösung mit einem Gehalt von 260,89 g/l, was 23,625 mol Fe-II entspricht, zugepumpt. Das $FeSO_4$/NaOH-Verhältnis betrug 0,525. Dann wurde die Stickstoffbegasung abgestellt und mit 86 l/h Luft über einen unter dem Rührer angebrachten Begasungsring begast. Die Begasung wurde abgebrochen, nachdem ein Fe-III-Gehalt von 66 mol-% erreicht war. Dann wurde erneut mit Stickstoff begast. Anschließend wurden in 4 Minuten 850 ml Natronlauge mit 300 g NaOH/l, was 6,375 mol NaOH entspricht, zugepumpt. Das $FeSO_4$/NaOH-Verhältnis betrug zu diesem Zeitpunkt 0,46. Danach wurden 1 100 ml $FeSO_4$-Lösung mit einem Gehalt von 260,89 g/l in 5 Minuten zugepumpt. Diese Fe-SO$_4$-Menge entspricht 1,889 mol FeSO$_4$. Das FeSO$_4$-Verhältnis betrug zu diesem Zeitpunkt 0,497. Anschließend wurde mit 86 l/h Luft bis zu einem Fe-III-Gehalt von 66,8 mol-% oxidiert.

Nach Beendigung der Oxidation wurde die Suspension filtriert, mit vollentsalztem Wasser gründlich gewaschen und bei 80°C unter Luft getrocknet. Das erhaltene Pulver wurde in einer Prallmühle gemahlen.

Der erhaltene Magnetit hatte folgende Eigenschaften:

| | |
|---|---|
| Helligkeit L* | : 51,2 CIELAB |
| a* | : 0,3 CIELAB |
| b* | : -4,8 CIELAB |
| Sphärizität | : 0,92 |
| Si-Gehalt | : 0,001 Gew.-% |
| Koerzitivkraft | : 52 Oe = 4,138 kA/m |
| Teilchengröße | : 0,2 $\mu$m |
| S-Gehalt | : 0,78 Gew.-%, bestimmt als SO$_3$ |
| Mn-Gehalt | : 0,11 Gew.-% |
| Wasserlösliche Anteile | : 0,13 Gew.-% |
| DIN-pH-Wert | : 6,2 |
| Temperaturstabilität | : 120 °C |

## Beispiel 2

In einen Rührkessel von 30 l Nutzvolumen wurden 6 000 g Natronlauge mit einem Gehalt von 300 g/l, was 45 mol NaOH entspricht, gegeben. Nach Einschalten der Stickstoffbegasung und des Rührers wurde die Natronlauge auf 90°C aufgeheizt. In 43 Minuten wurden nun 13 664 l Eisen-II-sulfatlösung mit einem Gehalt von 250,13 g/l, was 22,50 mol Fe-II entsprach, zugepumpt. Das FeSO$_4$/NaOH-Verhältnis betrug 0,500. Dann wurde die Stickstoffbegasung abgestellt und mit 80 l/h Luft über einen unter dem Rührer angebrachten Begasungsring begast. Die Begasung wurde abgebrochen, nachdem ein Fe-III-Gehalt von 67.3 mol-% erreicht war. Dann wurde erneut mit Stickstoff begast. Anschließend wurde in 4 Minuten 521 ml Natronlauge mit 300 g/l, was 3.910 mol NaOH entspricht, zugepumpt. Das FeSO$_4$/NaOH-Verhältnis betrug zu diesem Zeitpunkt 0.46. Jetzt wurden 1 187 ml FeSO$_4$-Lösung mit einem Gehalt von 250.13 g/l in 5 Minuten zugepumpt. Diese FeSO$_4$-Menge entspricht 1.955 mol FeSO$_4$. Das FeSO$_4$/NaOH-Verhältnis betrug zu diesem Zeitpunkt 0.500. Anschließend wurde mit 80 l/h Luft bis zu einem Fe-III-Gehalt von 66.8 mol-% weiter oxidiert.

Nach Beendigung dieser Reaktion wurde die Suspension filtriert, mit vollentsalztem Wasser gründlich gewaschen und bei 80°C unter Luft getrocknet. Das erhaltene Pulver wurde in einer Prallmühle gemahlen.

Der erhaltene Magnetit hatte folgende Eigenschaften:

| | |
|---|---|
| Helligkeit L* | : 51.7 |
| a* | : 0.3 |
| b* | : -4.6 |
| BET-Oberfläche | : 5.6 m$^2$/g |
| Sphärizität | : 0.92 |
| Si-Gehalt | : < 0.001 % |
| Koerzitivkraft | : 52 Oe = 4,138 kA/m |
| Teilchengröße | : 0.2 $\mu$m |
| S-Gehalt | : 1.03 % SO$_3$ |
| Mn-Gehalt | : 0.12 % |
| wasserlösliche Anteile : | 0.09 % |
| DIN-pH-Wert | : 5.6 |
| Fe-Gehalt | : 70.3 % |
| Temperaturstabilität | : 140°C |

## Vergleichsbeispiel

In einen Rührkessel von 30 l Nutzvolumen wurden 6 000 g Natronlauge mit einem Gehalt von 300 g/l, was 45 mol NaOH entspricht, gegeben. Nach Einschalten der Stickstoffbegasung und des Rührers wurde die Natronlauge auf 90°C aufgeheizt. In 43 Minuten wurden nun 13 664 1 Eisen-II-sulfatlösung mit einem Gehalt von 250.13 g/l, was 22.50 mol Fe-II entsprach, zugepumpt. Das $FeSO_4$/NaOH-Verhältnis betrug 0.500. Dann wurde die Stickstoffbegasung abgestellt und mit 80 l/h Luft über einen unter dem Rührer angebrachten Begasungsring begast. Die Begasung wurde abgebrochen, nachdem ein Fe-III-Gehalt von 67.3 mol-% erreicht war. Nach Beendigung dieser Reaktion wurde die Suspension filtriert, mit vollentsalztem Wasser gründlich gewaschen und bei 80°C unter Luft getrocknet. Das erhaltene Pulver wurde in einer Prallmühle gemahlen.

Der erhaltene Magnetit hatte folgende Eigenschaften:

| | |
|---|---|
| Helligkeit L* | : 53.8 |
| a* | : 0.4 |
| b* | : -4.1 |
| BET-Oberfläche | : 7.2 m$^2$/g |
| Sphärizität | : 0.90 |
| Si-Gehalt | : < 0.001 % |
| Koerzitivkraft | : 57 Oe = 4,535 kA/m |
| Teilchengröße | : 0.2 $\mu$m |
| S-Gehalt | : 1.08 % $SO_3$ |
| Mn-Gehalt | : 0.12 % |
| wasserlösliche Anteile : | 0.09 % |
| DIN-pH-Wert | : 5.6 |
| Fe-Gehalt | : 70.3 % |
| | |
| Temperaturstabilität | : 110°C |

**Patentansprüche**

1. Verwendung von siliciumarmen Magnetiten mit einem Siliciumgehalt von weniger als 0,025 Gew.-%, einer Helligkeit L* von von 50,0 bis 60,0 CIELAB, einem Farbstich a* von - 0,5 bis 1,5 CIELAB, einem Farbstich b* von - 3,0 bis -7,0 CIELAB, einer Sphärizität von 0,80 bis 1,0, einer Koerzitivkraft von 2,387 bis 5,570 kA/m (30 bis 70 Oe), einer Teilchengröße von 0, 1 bis 1,0 $\mu$m, einem Schwefel-Gehalt von 0,05 bis 1,1 Gew.-%, bestimmt als $SO_3$, einem Mangan-Gehalt von 0,05 bis 0,5 Gew.-%, einem Gehalt an wasserlöslichen Anteilen von weniger als 0,2 Gew.-% und einem pH-Wert von 4,0 bis 8,5, erhältlich indem

> a) eine alkalische Komponente in Form einer wässrigen Lösung unter Schutzgas vorgelegt wird,
> b) die alkalische Komponente auf eine Temperatur von 50 bis 100°C, vorzugsweise auf 60 bis 90° C aufgeheizt wird,
> c) eine Eisen-II-komponente in Form einer wässrigen Lösung in einer Menge zugegeben wird, so dass ein Molverhältnis von Fe-II-komponente zu einem Äquivalent alkalischer Komponente von 0,48 bis 0,6 vorliegt, und wobei die Temperatur auf 50 bis 100°C, vorzugsweise 60 bis 90°C, gehalten wird,
> d) die unter c) erhaltene Suspension mit einem Oxidationsmittel behandelt wird, bis ein Fe-III-Gehalt von mehr als 65 mol-% in der Eisenverbindung vorliegt,
> e) nach der Oxidation unter d) erneut unter Schutzgas eine alkalische Komponente in Form einer wässrigen Lösung zu der in d) erhaltenen Suspension in einer Menge gegeben wird, dass ein theoretisches Molverhältnis von unter c) eingesetztem Fe-II zu einem Äquivalent insgesamt eingesetzter, alkalischer Komponente von 0,40 bis 0,48, bevorzugt 0,45 bis 0,47, erhalten wird,
> f) diese Suspension auf 50 bis 100° C, vorzugsweise 60 bis 90°C, erwärmt wird,
> g) eine Fe-II-komponente in Form einer wässrigen Lösung in einer Menge dazugegeben wird, so dass ein Molverhältnis von Fe-II-komponente zu einem Äquivalent alkalischer Komponente von 0,48 bis 0,60 erhalten wird,
> h) mit einem Oxidationsmittel bis zu einem Fe-III-gehalt in der Eisenverbindung von mehr als 65 mol-%, bezogen auf Eisengehalt, oxidiert wird, und dann
> i) filitriert und der Rückstand gewaschen, getrocknet und gemahlen wird,

zur Herstellung von Tonern, zur Einfärbung von Beton, Lacken, Kunststoffen, Papier und Dispersionsfarben und bei der Herstellung von Druckfarben und Farben für Tintenstrahldrucker.

**2.** Verwendung gemäß Anspruch 1, **dadurch gekennzeichnet, dass** die Magnetite einen Siliciumgehalt von weniger als 0,0025 Gew.-% haben.

**3.** Verwendung gemäß Anspruch 1, **dadurch gekennzeichnet, dass** die Magnetite einen Siliciumgehalt von weniger als 0,001 Gew.-% haben.

**4.** Siliciumarme Magnetite gemäß einem der Ansprüche 1 bis 3 enthaltene Toner.

**Claims**

**1.** Use of low-silicon magnetites having a silicon content of less than 0.025% by weight, a lightness L* of 50.0 to 60.0 CIELAB, a hue a* of -0.5 to 1.5 CIELAB, a hue b* of -3.0 to -7.0 CIELAB, a sphericity of 0.80 to 1.0, a coercive force of 2.387 to 5.570 kA/m (30 to 70 Oe), a particle size of 0.1 to 1.0 $\mu$m, a sulphur content of 0.05 to 1.1% by weight, determined as $SO_3$, a manganese content of 0.05 to 0.5% by weight, a content of water-soluble fractions of less than 0.2% by weight and a pH of 4.0 to 8.5, obtainable by a procedure in which

   a) an alkaline component in the form of an aqueous solution is initially introduced under an inert gas,
   b) the alkaline component is heated to a temperature of 50 to 100°C, preferably to 60 to 90°C,
   c) an iron(II) component in the form of an aqueous solution is added in an amount such that a molar ratio of Fe (II) component to one equivalent of alkaline component of 0.48 to 0.6 is present, the temperature being kept at 50 to 100°C, preferably 60 to 90°C,
   d) the suspension obtained under c) is treated with an oxidizing agent until an Fe(III) content of more than 65 mol% is present in the iron compound,
   e) after the oxidation under d), an alkaline component in the form of an aqueous solution is added, again under inert gas, to the suspension obtained in d), in an amount such that a theoretical molar ratio of Fe(II) used under c) to one equivalent of total alkaline component used of 0.40 to 0.48, preferably 0.45 to 0.47, is obtained,
   f) this suspension is heated to 50 to 100°C, preferably 60 to 90°C,
   g) an Fe(II) component in the form of an aqueous solution is added in an amount such that a molar ratio of Fe (II) component to one equivalent of alkaline component of 0.48 to 0.60 is obtained,
   h) oxidation is effected with an oxidizing agent to an Fe(III) content in the iron compound of more than 65 mol%, based on iron content, and then
   i) filtration is effected and the residue is washed, dried and milled,

   for the preparation of toners, for colouring concrete, coatings, plastics, paper and emulsion paints and in the preparation of printing inks and inks for inkjet printers.

**2.** Use according to Claim 1, **characterized in that** the magnetites have a silicon content of less than 0.0025% by weight.

**3.** Use according to Claim 1, **characterized in that** the magnetites have a silicon content of less than 0.001 % by weight.

**4.** Toners containing low-silicon magnetites according to any of Claims 1 to 3.

**Revendications**

**1.** Utilisation de magnétites pauvres en silicium ayant une teneur en silicium inférieure à 0,025 % en poids, une luminosité L* de 50,0 à 60,0 CIELAB, une nuance de couleur a* de -0,5 à 1,5 CIELAB, une nuance de couleur b* de -3,0 à -7,0 CIELAB, une sphéricité de 0,80 à 1,0, une coercivité de 2,387 à 5,570 kA/m (30 à 70 Oe), une taille de particule de 0,1 à 1,0 $\mu$m, une teneur en soufre de 0,05 à 1,1 % en poids, calculée en tant que $SO_3$, une teneur en manganèse de 0,05 à 0,5 % en poids, une teneur en parties solubles dans l'eau inférieure 0,2 % en poids et une valeur de pH de 4,0 à 8,5, qui peuvent être obtenues par

   a) disposition d'un composant alcalin sous la forme d'une solution aqueuse sous un gaz protecteur,
   b) chauffage du composant alcalin à une température de 50 à 100 °C, de préférence de 60 à 90 °C,
   c) ajout d'un composant fer II sous la forme d'une solution aqueuse en une quantité telle qu'un rapport molaire entre le composant Fe II et un équivalent du composant alcalin soit de 0,48 à 0,6, la température étant maintenue de 50 à 100 °C, de préférence 60 à 90 °C,

d) traitement de la suspension obtenue en c) avec un agent d'oxydation, jusqu'à l'obtention d'une teneur en Fe III supérieure à 65 % en moles dans le composé de fer,

e) après l'oxydation selon d), ajout, de nouveau sous gaz protecteur, d'un composant alcalin sous la forme d'une solution aqueuse à la suspension obtenue en d) en une quantité telle qu'un rapport molaire théorique entre le Fe II utilisé en c) et un équivalent du composant alcalin utilisé au total soit de 0,40 à 0,48, de préférence 0,45 à 0,47,

f) chauffage de cette suspension de 50 à 100 °C, de préférence de 60 à 90 °C,

g) ajout d'un composant Fe II sous la forme d'une solution aqueuse en une quantité telle qu'un rapport molaire entre le composant Fe II et un équivalent du composant alcalin soit de 0,48 à 0,60,

h) oxydation avec un agent d'oxydation jusqu'à une teneur en Fe III dans le composé de fer supérieure à 65 % en moles par rapport à la teneur en fer et

i) filtration et lavage, séchage et broyage du résidu, pour la fabrication de toner, pour la coloration de béton, laques, plastiques, papier et peintures en émulsion et pour la fabrication d'encres d'impression et d'encres pour imprimantes jet d'encre.

2. Utilisation selon la revendication 1, **caractérisée en ce que** les magnétites ont une teneur en silicium inférieure à 0,0025 % en poids.

3. Utilisation selon la revendication 1, **caractérisée en ce que** les magnétites ont une teneur en silicium inférieure à 0,001 % en poids.

4. Toner contenant des magnétites pauvres en silicium selon l'une quelconque des revendications 1 à 3.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 802928 A
- JP 51044298 A
- DE 3209469 A
- DE 2618058 A
- DE 3004718 A
- DE 2460493 A
- EP 0187331 A
- DD 216040 A
- DD 284478 A
- JP 61034070 A
- US 4992191 A
- DE 19702431 A
- EP 0911370 A